# EUROPEAN PATENT SPECIFICATION

(11) **EP 1 022 114 B1**
(45) Date of publication and mention of the grant of the patent: **05.06.2002**
(21) Application number: 00300349.8
(22) Date of filing: 19.01.2000
(51) Int. Cl.: B29C 65/34

(54) **Control of electrofusion welding operations**
Elektroschweissverfahrenregelsystem
Régulation d'opérations d' électrosoudage

(30) Priority: 23.01.1999 GB 9901437
(43) Date of publication of application: 26.07.2000
(73) Proprietor: Glynwed Pipe Systems Limited, Coleshill, Birmingham B46 3BP (GB)
(72) Inventor: Wilkinson, Kevin Mark, Bretfield Court, Dewsbury WF12 9DB (GB)
(74) Representative: Pawlyn, Anthony Neil

(56) References cited:
- EP-A- 0 194 249
- CH-A- 605 082
- DE-A- 2 112 848
- DE-A- 2 408 475
- US-A- 5 788 789

## Description

This invention concerns improvements in and relating to control, and particularly, but not exclusively to the control of electrofusion welding operations.

Electrofusion is a commonly employed technique for joining components together. It is, for instance, commonly used for joining lengths of plastics pipes to one another through the use of a coupling to which a current is applied. Resistance heating in the coupling causes partial melting of that coupling and/or pipes. Upon cooling an effective seal is obtained.

Electrofusion generally calls for relatively rapid loading of the power supply and this can cause significant problems. These problems are particularly acute in the frequently occurring situation where electrofusion is employed at remote locations where mains power supply is not available. The effects of rapidly changing loads are particularly pronounced for portable generators, for instance.

A power supply known from US-A-5,788,879 discloses adjustment of the heating time.

It is an aim of the present invention to provide apparatus and methods which address these problems.

According to a first aspect of the invention we provide a method of controlling the application of an alternating source voltage to a process, the source voltage being applied to a process for a portion of the voltage cycle between a starting point and a stop point, the stop point being defined by a point on the voltage cycle where the voltage crosses a predetermined level, the method including :-
analysing the source voltage to determine the frequency of the source voltage and/or the timing of points corresponding to the predetermined level in the source voltage;
setting a time window based on the frequency of the source voltage and/or based on the timing of the points corresponding to the predetermined level for the source voltage;
one or more points equating to the predetermined level falling within the window being treated as stop points and one or more points equating to the predetermined level falling outside the window not being treated as stop points.

In this way the application of the voltage to the process is only stopped when a correct crossing of the predetermined value is reached and inadvertent predetermined value crossings do not interfere with the application of the voltage.

The voltage source may be a cyclic source. Preferably an AC source is used. Preferably the source is of substantially fixed frequency. Preferably the unloaded source is a sine wave. The AC source may be from the mains power supply, but is preferably from a generator or portable power source.

Preferably the process is an electrofusion welding operation. Preferably the process involves resistance heating of a coupling to join two elements and/or of one or both of the elements, most preferably to give partial melting. Preferably the elements are conduits for water and/or gas and/or cables.

Preferably the portion of the cycle between start and stop points is substantially the same between cycles. Preferably there are two start points and two stop points in each cycle of the source voltage. The method preferably excludes other occurrences of the predetermined value from being treated as stop points.

Most preferably the start point separations are defined by the determined frequency. The start point occurs with a corresponding frequency, ideally, in such cases.
Alternatively the start point may be defined by a time period elapsed since a stop point occurred and most preferably the preceding stop point. Most preferably the method excludes other occurrences of the predetermined value from forming false preceding stop points.

The stop point is preferably defined by the first occurrence of the predetermined value occurring within the time window.

The separation of one or more pairs of occurrence of start and stop points may be varied to vary the amount of the source voltage applied to the process. Increasing the time between a start point and a stop point increases the voltage delivery, decreasing the separation decreases the voltage delivery.

The predetermined level is preferably zero voltage. The predetermined level is preferably taken to occur when the voltage reaches that level from either direction on the voltage cycle.

The frequency determination is preferably made on an unloaded voltage source. The frequency may be based on an average determination over a period of time. The source signal may be subjected to noise reduction in determining the frequency. Phase locked loop processing may be employed in this regard. The source signal may be processed to remove harmonics. The harmonics removed may be harmonics corresponding to a predicted frequency. The source signal may be subjected to filtering, most preferably to remove high frequencies. A digital low pass filter my be used for this purpose. Ideally phase locked loop noise reduction, followed by harmonic removal, followed by high frequency filtering is applied to the source signal. The result of the processing may be defined as the underlying voltage cycle. The underlying voltage cycle is preferably used to determine the stop points and/or the timing of the window.

The timing of the predetermined value occurrence may be made directly from the source, ideally unloaded, or the timing may be determined from the frequency determination.

The time window may be set to run up to the expected predetermined value occurrence point, based on the frequency determination or predetermined value occurrence determination. The window may be set to run from the expected predetermined value occurrence point, based on the frequency determination or predetermined value occurrence determination. Most preferably the window extends on either side of the expected predetermined value occurrence point, based on the frequency determination or predetermined value occurrence determination. The window may extend for upto 10% or for upto 5% or for upto 2% of the cycle duration on one or both sides of the expected predetermined value occurrence point.

Preferably the first occurrence of the predetermined value within a window is treated as the stop point. Preferably the first occurrence of the predetermined value within a window determines the timing of the next start point. The timing of the next start point may alternatively, or additionally, be determined by the frequency determination and or the predetermined value occurrence determination made on the source voltage.

Preferably all occurrences of the predetermined value occurring outside the window are ignored for the purposes of forming stop points. Preferably all occurrences of the predetermined value occurring outside the window are ignored for the purposes of determining start points.

Preferably the above mentioned screening process is provided for cycle after cycle of the source voltage, preferably twice in each cycle, ideally once in each half of a cycle.

Preferably the initial start point is set by manual initiation of the method. Subsequent stop and/or start points are preferably determined according to the method of the invention.

Preferably the initial frequency calculation is compared with a predetermined range. Preferably an indication is provided as to sources falling within (suitable sources) and/or sources falling outside (unsuitable sources) the range.

The underlying frequency or predetermined value occurrence, and most preferably stop point occurrence, may be investigated during the process operation. The investigation may be conducted by considering variations in an averaged frequency against an averaged frequency for a preceding period. The predicted predetermined value occurrence and/or the window may be adjusted according to any detected variation in the underlying frequency. Systematic variation in the underlying frequency overtime is thus accounted for.

The extent of the window may be varied during the operation of the process. The extent of the window may be reduced from a first extent to a second extent, and potentially still further, as the process progresses.

According to a second aspect of the invention we provide apparatus for controlling the application of an alternating source voltage to a process, the apparatus receiving the source voltage and applying the source voltage to the process for a portion of the voltage cycle, the apparatus providing a starting point and a stop point between which the voltage is applied to the process, the stop point being defined by a point on the voltage cycle where the voltage crosses a predetermined level, the apparatus providing :
means for analysing the source voltage to determine the frequency of the source voltage and/or the timing of points corresponding to the threshold in the source voltage;
means for setting a time window based on the frequency of the source voltage and/or based on the timing of the points corresponding to the predetermined level for the source voltage;
means for monitoring the level of the source voltage, one or more points equating to the predetermined level failing within the window being treated as stop points and one or more points equating to the predetermined level falling outside the window not being treated as stop points.

The apparatus may be provided as a part of an electrofusion welding power controller and/or may be retro fitted to existing electrofusion welding power controllers.

Various embodiments of the invention will now be described, by way of example only, with reference to the accompanying drawings in which :-
Figure 1 illustrates an ideal source voltage profile;
Figure 2 illustrates the timing of triac activation;
Figure 3 illustrates a typical actual source voltage profile, for instance that of a portable generator;
Figure 4 illustrates a typical actual source voltage profile under load;
Figure 5 illustrates a technique according to the present invention in which the source voltage profile is examined;
Figure 6 illustrates schematically a control technique according to an embedment of the present invention;
Figure 7 illustrates the process of zero signal screening;
Figure 8 illustrates the process of ongoing frequency monitoring.

Electrofusion generally employs resistance heating of elements to causing their partial melting and so, upon cooling, give a sealed joint. The power sources used vary depending on the situation. In most "field" operations, however, mains power supply is not available and a portable power source such as a generator must be used. Even with mains sources, and particularly with portable sources, problems in controlling the operation occur.

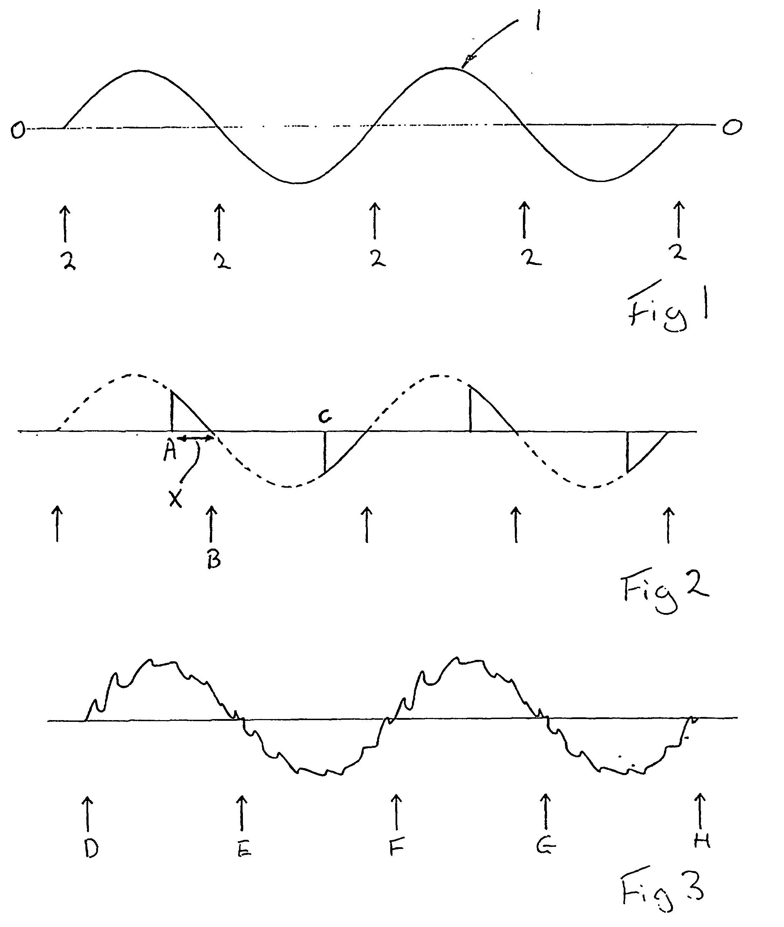

As shown in Figure 1, in an ideal world the voltage profile of the power source is a simple, pure sine wave 1. The sine wave has a series of zero voltage cross-over points 2 during which the voltage passes cleanly through zero.

Electrofusion operations generally employ a controlled power device, for instance a triac, to control the application of the source voltage, dotted plot in Figure 2, to give an applied voltage, solid plot of Figure 2, to the resistance heating target. A control signal from the apparatus electronics causes the controlled power device to be switched on, time A, for a portion of the cycle, in this case portion X. The longer this portion the higher the root mean square voltage. Rapid switching of the controlled power device on and off obviously occurs in such systems, approximable 100 times per second. Due to the properties the controlled power device remains on, and the voltage is applied to the target, until a zero in the source voltage occurs, time B, at which time the controlled power device switches off. This removes the applied voltage from the target. Subsequent control signals switch the controlled power device on once more at an equivalent part of the source cycle, time C. This continues throughout the operation of the electrofusion task.

Unfortunately the above described operation represents an ideal situation which does not occur in practice.

In reality the source voltage profile is not a pure sine wave, but indeed contains a substantial amount of noise, as illustrated in Figure 3. This loose approximation to a sine wave in itself causes problems as variations in the timing of the cross overs occur. For instance, time period between the first zero D and second E is slightly different to time period between zero E and zero F, zero F and zero G, between zero G and zero H and so on. This can result in the timing of the controlled power device firing being out and an uneven and unknown voltage, and hence heating, being applied to the target. This can effect the integrity and/or quality of the weld, for instance.

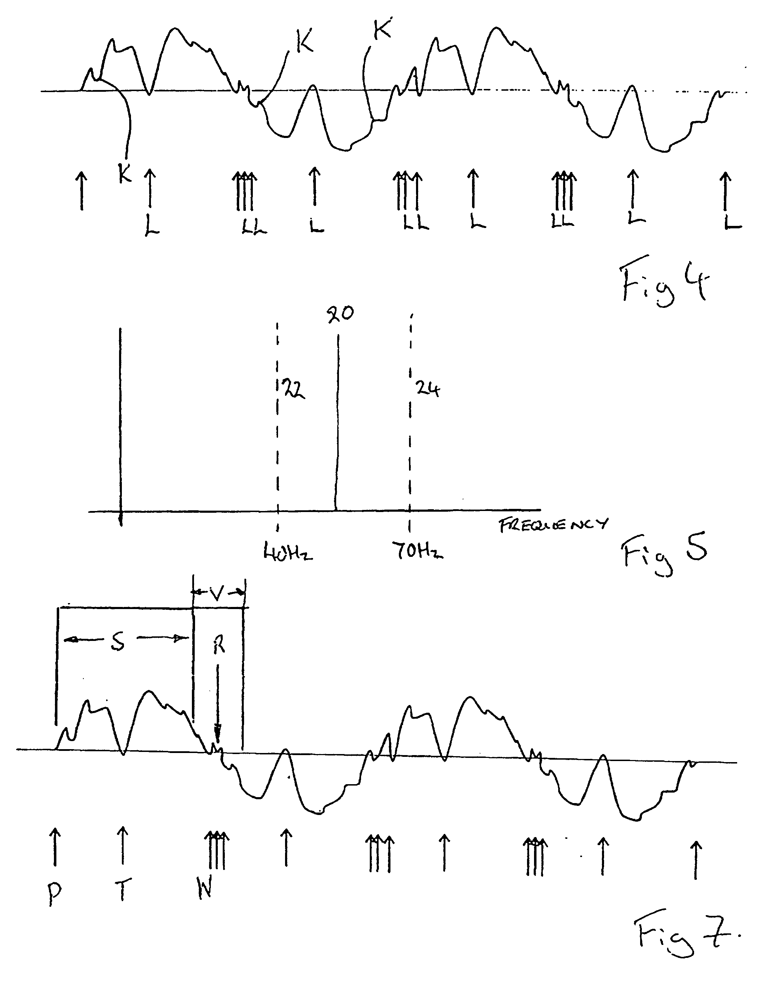

The position is even worse when the reality of the source voltage profile, when a load is applied by the electrofusion unit, is considered, Figure 4. The controlled power device, when it fires, asks for a very rapid increase in current through the system. This is resisted by the inductor. In responding the net result can be the collapse of the source voltage. This gives a very poor source voltage profile for control and accuracy purposes. The profile includes substantial dips K and even more significantly false zeros L. The dips and false zeros not only impair the power applied, but in the case of the false zeros can also lead to premature switching off of the controlled power devices and great difficulties in providing appropriate switching signals for the controlled power device.

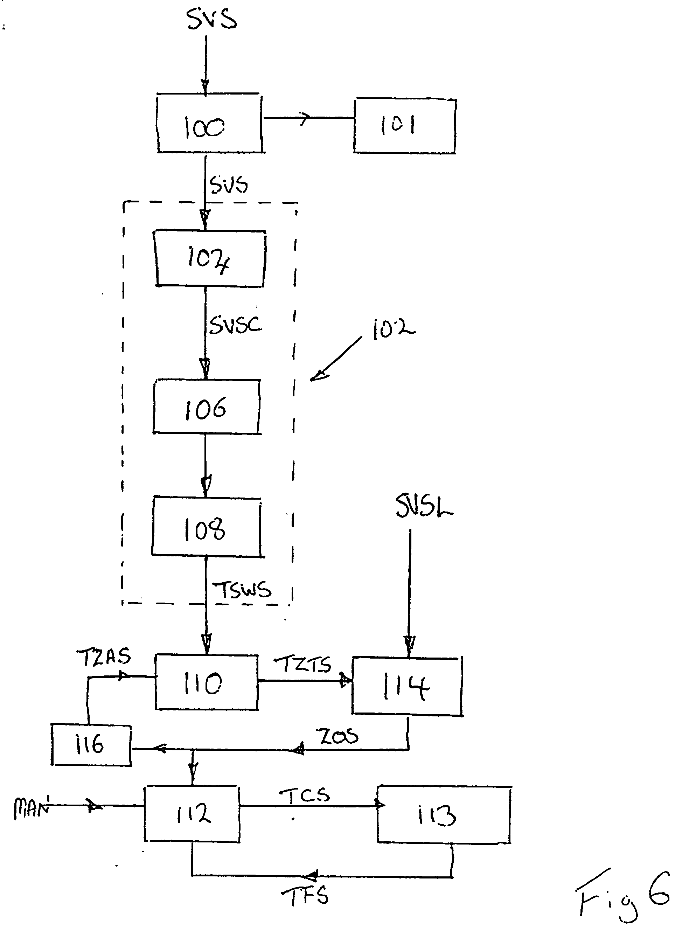

In a technique according to the present invention the source voltage is examined as an initial step. This examination is illustrated in Figure 5 and consists of a comparison of the apparent frequency 20 of the source voltage, unloaded, with predetermined thresholds 22, 24. If the source frequency is not within this range, for instance 40Hz to 70Hz, then the operator is informed that the source is too unsuitable to be used. An important monitoring function is provided as a result.

This stage of a basic frequency screening stage, 100, applied to a source voltage signal, SVS, is illustrated in Figure 6 alongside the other stages. The stage 100 gives a yes/no indication on the suitability of the power source, display 101.

The microprocessor provided in the apparatus then analyses, as the next stage 102, the unloaded source signal, SVS, with a view to determining an actual frequency and hence true zero points for the noisy source signal. This process involves a number of processes. Firstly, a phase locked loop process 104 is used to remove noise from the signal as far as reasonably possible to give a cleaned signal SVSC. Secondly, a process of removing harmonics, 106, for the generally expected actual frequency is applied. Thirdly, high frequencies are filtered off using a digital low pass filter, 108. The result of theses steps, 104, 106, 108, is that overall stage 102 gives a determined true sine wave signal, TSWS, to which the noisy actual signal can be attributed. This defines the actual frequency and hence the timing of the theoretical zeros which should exist can be determined, stage 110, to produce theoretical zero times signal, TZTS.

Based on these calculations the system can be started by the operator manually firing, input MAN, the controlled power device control stage 112 in the first instance to give controlled power device control signal TCS which causes the controlled power device 113 to fire.

As the expected zeros are known, TZTS signal, these can be used in the subsequent stages to give more accurate further controlled power device firing control.

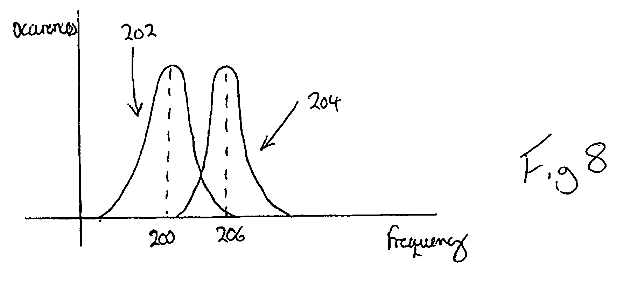

In monitoring stage 114 a signal representative of the source voltage waveform under load, SVSL is considered with time. The monitoring process is illustrated in Figure 7 and is based on the stage being aware, due to theoretical zero time signal TZTS, of the time of initial firing of the controlled power device, time P, and hence the generally expected time, time R, at which the next zero is to be expected. The monitoring stage applies a screening process in which any zeros occurring within a large part of the time between the firing P and the expected time of the next zero R are ignored. During this time period, period S, the stage 114 ignores zeros and does not provide any signal to the controlled power device control stage 112. As illustrated, therefore, false zero T is ignored. Once the appropriate time period, period V, during which zeros can reasonably be expected is entered, then the next zero encountered, zero W, generates a zero occurrence signal, ZOS, which is sent to the controlled power device control stage 112. This signal, ZOS, is used to generate the determination of the start of the next cycle and hence the time period X before the next controlled power device control signal TCS is dispatched by stage 112.

The above mentioned process of screening the false zeros out is performed for firing after firing until the desired power and/or time and/or current etc has been applied to the target and the electrofusion task is ended. This will obviously involve many thousands of cycles.

To ensure that the time delay between the signal to fire the controlled power device, TCS, and the actual firing of the controlled power device does not become significant, the controlled power device sends a controlled power device fired signal, TFS, to the controlled power device control stage 112 upon actual firing.

Even though the initial stage 102 determines the underlying frequency for the source signal, improved accuracy can be obtained by monitoring the underlying frequency during the task. Thus in stage 116 the separation of the actual zeros occurring in the acceptable window of stage 114, signal ZOS, is monitored over time. This stage 116 considers whether systematic changes in the underlying frequency are occurring.

The time separation of the zeros used and/or the frequency can be used in this consideration. As illustrated in Figure 8, schematically, the frequency is used. During the first 1000 cycles the distribution of the actual frequencies occurring relative to the determined frequency 200 is shown by distribution 202. Over time, for instance by cycles 8000 to 9000, the distribution may have shifted due to a variety of factors, to distribution 204. Clearly by this second time period, therefore, the mean frequency 206 has shifted and a more accurate window for tolerable zeros would apply if the new mean frequency 206 were applied rather than the only mean 200. Stage 116 thus generates a theoretical zero time adjustment signal, TZAS, which is used by stage 110 to generate the new theoretical zero time signal, TZTS, for monitoring stage 114.

The time period and/or number of cycles after which the underlying frequency to be applied is changed can be set or adjusted according to the practicalities of the situations encountered.

Depending on the distribution of the true zero occurrence relative to the window set for the tolerable zeros, the window can be adjusted over time. Thus if the zeros are relatively tightly grouped around the determined frequency then a tighter window could be applied. Again the window could be tightened and/or loosened over time.

By controlling the operation of the triac in this way the invention ensures that the controlled power device is operated at the correct time in the cycle and for the correct duration. The accuracy of the application of the power to the heating target is improved significantly as a result, with improved quality of the result and improved assurance as to the quality.

Due to the manner in which the improved control is provide the system can be provided on new electrofusion units, but is also suited to retrofitting on existing units.

## Claims

1. A method of controlling the application of an alternating source voltage to a process, the source voltage being applied to a process for a portion of the voltage cycle between a starting point and a stop point, the stop point being defined by a point on the voltage cycle where the voltage crosses a predetermined level, the method including:-
analysing the source voltage to determine the frequency of the source voltage and/or the timing of points corresponding to the predetermined level in the source voltage;
setting a time window based on the frequency of the source voltage and/or based on the timing of the points corresponding to the predetermined level for the source voltage;
one or more points equating to the predetermined level falling within the window being treated as stop points and one or more points equating to the predetermined level falling outside the window not being treated as stop points.

2. A method according to claim 1 in which the start point separations are defined by the determined frequency.

3. A method according to claim 1 or claim 2 in which the stop point is defined by the first occurrence of the predetermined value occurring within the window.

4. A method according to any of claims 1 to 3 in which the predetermined level is a zero voltage.

5. A method according to any preceding claim in which all occurrences of the predetermined value occurring outside the window are ignored for the purposes of forming stop points.

6. A method according to any preceding claim in which the window extends on either side of the expected predetermined value occurrence point, based on the frequency determination or predetermined value occurrence determination.

7. A method according to any preceding claim in which the frequency determination is made on an unloaded voltage source and the frequency may be based on an average determination over a period of time.

8. A method according to claim 7 in which the source signal is subjected to noise reduction before determining the frequency.

9. A method according to claim 7 or claim 8 in which the source signal is processed to remove harmonics.

10. A method according to any one of claims 7 to 9 in which the source signal is subjected to filtering to remove high frequencies.

11. A method according to any of claims 7 to 10 in which the result of the processing is defined as the underlying voltage cycle and the underlying voltage cycle is used to determine the timing of the window.

12. A method according to any preceding claim in which the initial frequency calculation is compared with a predetermined range and an indication is provided as to sources falling within the range and/or sources falling outside the range.

13. A method according to any preceding claim in which the initial start point is set by manual initiation of the method and subsequent stop and/or start points are determined according to the method of any preceding claim.

14. A method according to any preceding claim in which the underlying frequency is investigated during the process operation by considering variations in an averaged frequency against an averaged frequency for a preceding time period.

15. A method according to claim 14 in which the predicted predetermined value occurrence and/or the window timing are adjusted according to any detected variation in the underlying frequency.

16. A method according to any preceding claim in which the time extent of the window is varied during the operation of the process.

17. Apparatus for controlling the application of an alternating source voltage to a process, the apparatus receiving the source voltage and applying the source voltage to the process for a portion of the voltage cycle, the apparatus providing a starting point and a stop point between which the voltage is applied to the process, the stop point being defined by a point on the voltage cycle where the voltage crosses a predetermined level, the apparatus providing :
means for analysing the source voltage to determine the frequency of the source voltage and/or the timing of points corresponding to the threshold in the source voltage;
means for setting a time window based on the frequency of the source voltage and/or based on the timing of the points corresponding to the predetermined level for the source voltage;
means for monitoring the level of the source voltage, one or more points equating to the predetermined level failing within the window being treated as stop points and one or more points equating to the predetermined level falling outside the window not being treated as stop points.

18. Apparatus according to claim 17 wherein the apparatus are provided as a part of an electrofusion welding power controller and/or is retro fitted to an existing electrofusion welding power controller.

## Patentansprüche

1. Verfahren zur Regelung des Anlegens einer Wechselversorgungsspannung an ein Verfahren, wobei die Versorgungsspannung über einen Teil des Spannungszyklus zwischen einem Start-Punkt und einem Stopp-Punkt an das Verfahren angelegt wird, wobei der Stopp-Punkt durch einen Punkt im Spannungszyklus definiert ist, an dem die Spannung eine vorbestimmte Höhe durchschreitet, welches umfasst:
- Analysieren der Versorgungsspannung, um die Frequenz der Versorgungsspannung und/oder die zeitliche Lage von Punkten zu bestimmen, die der vorbestimmten Höhe in der Versorgungsspannung entsprechen;
- Festsetzen eines Zeitfensters auf der Grundlage der Frequenz der Versorgungsspannung und/oder der Grundlage der zeitlichen Lage der Punkte, die der vorbestimmten Höhe entsprechen, für die Versorgungsspannung;
- wobei ein oder mehrere Punkte, die der vorbestimmten Höhe entsprechen und in das Fenster fallen, als Stopp-Punkte behandelt werden und ein oder mehrere Punkte, die der vorbestimmten Höhe entsprechen und nicht in das Fenster fallen, nicht als Stopp-Punkte behandelt werden.

2. Verfahren nach Anspruch 1, in dem die Start-Punkt-Abstände durch die bestimmte Frequenz definiert sind.

3. Verfahren nach Anspruch 1 oder Anspruch 2, in dem der Stopp-Punkt durch das erste Auftreten des vorbestimmten Werts, der in dem Fenster auftritt, definiert ist.

4. Verfahren nach einem der Ansprüche 1 bis 3, in dem die vorbestimmte Höhe der Spannung null ist.

5. Verfahren nach einem vorangehenden Anspruch, in dem
jedes Auftreten des vorbestimmten Werts, der außerhalb des Fensters auftritt, für den Zweck der Bildung von Stopp-Punkten ignoriert wird.

6. Verfahren nach einem vorangehenden Anspruch, in dem
sich das Fenster auf beiden Seiten des Punkts des erwarteten Auftretens des vorbestimmten Wertes erstreckt, und zwar in Abhängigkeit von der Frequenzbestimmung oder der Bestimmung des Auftretens des vorbestimmten Werts.

7. Verfahren nach einem vorangehenden Anspruch, in dem
die Frequenzbestimmung bei einer unbelasteten Spannungsquelle vorgenommen wird und die Frequenz auf einer Durchschnittsbestimmung über eine Zeitspanne beruhen kann.

8. Verfahren nach Anspruch 7, in dem das Signal der
Quelle vor der Bestimmung der Frequenz einer Rauschverringerung unterzogen wird.

9. Verfahren nach Anspruch 7 oder Anspruch 8, in dem das
Signal der Quelle verarbeitet wird, um Harmonische zu entfernen.

10. Verfahren nach einem der Ansprüche 7 bis 9, in dem das
Signal der Quelle einer Filterung unterzogen wird, um Hochfrequenzen zu entfernen.

11. Verfahren nach einem der Ansprüche 7 bis 10, in dem
das Ergebnis der Verarbeitung als der zu Grunde liegende Spannungszyklus definiert wird und der zu Grunde liegende Spannungszyklus verwendet wird, um die zeitliche Lage des Fensters zu bestimmen.

12. Verfahren nach einem vorangehenden Anspruch, in dem
die anfängliche Frequenzberechnung mit einem vorbestimmten Bereich verglichen wird und eine Anzeige erfolgt, ob Quellen in den Bereich fallen und/ oder ob Quellen außerhalb des Bereichs liegen.

13. Verfahren nach einem vorangehenden Anspruch, in dem
der anfängliche Start-Punkt durch manuellen Beginn des Verfahrens festgelegt wird und darauf folgende Stoppund/oder Start-Punkte gemäß dem Verfahren nach einem vorangehenden Anspruch bestimmt werden.

14. Verfahren nach einem vorangehenden Anspruch, in dem
die zu Grunde liegende Frequenz während des Verfahrensbetriebs untersucht wird, indem Schwankungen in einer gemittelten Frequenz gegenüber einer gemittelten Frequenz für eine vorangehende Zeitspanne berücksichtigt werden.

15. Verfahren nach Anspruch 14, in dem das vorhergesagte
Auftreten des vorbestimmten Werts und/oder die zeitliche Lage der Fenster gemäß einer erfassten Schwankung der zu Grunde liegenden Frequenz eingestellt werden.

16. Verfahren nach einem vorangehenden Anspruch, in dem
die zeitliche Erstreckung des Fensters während des Betreibens des Verfahrens variiert wird.

17. Vorrichtung zur Regelung des Anlegens einer Wechselversorgungsspannung an ein Verfahren, welches die Versorgungsspannung empfängt und die Versorgungsspannung über einen Teil des Spannungszyklus an das Verfahren anlegt und einen Start-Punkt und einen Stopp-Punkt bereitstellt, zwischen welchen die Spannung an dem Verfahren angelegt wird, wobei der Stopp-Punkt durch einen Punkt im Spannungszyklus definiert wird, bei dem die Spannung eine vorbestimmte Höhe durchschreitet, und welche aufweist:
Mittel zum Analysieren der Versorgungsspannung, um die Frequenz der Versorgungsspannung und/oder die zeitliche Lage von Punkten zu bestimmen, die dem Schwellenwert in der Versorgungsspannung entsprechen;
Mittel zum Einstellen eines Zeitfensters auf der Basis der Frequenz der Versorgungsspannung und/oder der Basis der zeitlichen Lage der Punkte, die der vorbestimmten Höhe der Versorgungsspannung entsprechen;
Mittel zur Überwachung der Höhe der Versorgungsspannung, wobei ein oder mehrere Punkte, die der vorbestimmten Höhe entsprechen und in das Fenster fallen, als Stopp-Punkte behandelt werden, und ein oder mehrere Punkte, die der vorbestimmten Höhe entsprechen und nicht in das Fenster fallen, nicht als Stopp-Punkte behandelt werden.

18. Vorrichtung nach Anspruch 17, die als Teil eines
Stromreglers für das Elektroschweißen bereitgestellt ist und/oder nachträglich für einen vorhandenen Stromregler für das Elektroschweißen eingerichtet wird.

## Revendications

1. Procédé de commande de l'application d'une tension de source alternative à un processus, la tension de source étant appliquée à un processus pour une partie du cycle de tension entre un point de départ et un point d'arrêt, le point d'arrêt étant défini par un point sur le cycle de tension où la tension croise un niveau prédéterminé, le procédé comprenant :
l'analyse de la tension de source afin de déterminer la fréquence de la tension de source et/ou le positionnement temporel de points correspondant au niveau prédéterminé dans la tension de source ;
régler une fenêtre temporelle en se basant sur la fréquence de la tension de source et/ou en se basant sur le positionnement temporel de points correspondant au niveau prédéterminé pour la tension de source ;
un ou plusieurs points étant égaux au niveau prédéterminé compris dans la fenêtre en cours de traitement en tant que points d'arrêt et un ou plusieurs points étant égaux au niveau prédéterminé n'étant pas compris dans la fenêtre qui n'est pas en cours de traitement en tant que points d'arrêt.

2. Procédé selon la revendication 1, dans lequel les séparations de point de départ sont définies par la fréquence déterminée.

3. Procédé selon la revendication 1 ou la revendication 2, dans lequel le point d'arrêt est défini par la première occurrence de la valeur prédéterminée se produisant à l'intérieur de la fenêtre.

4. Procédé selon l'une quelconque des revendications 1 à 3, dans lequel le niveau prédéterminé est une tension nulle.

5. Procédé selon l'une quelconque des revendications précédentes, dans lequel toutes les occurrences de la valeur prédéterminée se produisant à l'extérieur de la fenêtre sont ignorées en vue de former des points d'arrêt.

6. Procédé selon l'une quelconque des revendications précédentes, dans lequel la fenêtre s'étend sur les deux côtés du point d'occurrence de la valeur prédéterminée attendue, en se basant sur la détermination de fréquence ou sur la détermination d'occurrence de valeur prédéterminée.

7. Procédé selon l'une quelconque des revendications précédentes, dans lequel la détermination de fréquence est réalisée sur une source de tension non chargée et la fréquence peut se baser sur une détermination moyenne sur un intervalle de temps.

8. Procédé selon la revendication 7, dans lequel le signal de source est soumis à une réduction du bruit avant la détermination de la fréquence.

9. Procédé selon la revendication 7 ou la revendication 8, dans lequel le signal de source est traité afin d'éliminer les harmoniques.

10. Procédé selon l'une quelconque des revendications 7 à 9, dans lequel le signal de source est soumis à un filtrage afin d'éliminer des hautes fréquences.

11. Procédé selon l'une quelconque des revendications 7 à 10, dans lequel le résultat du traitement est défini en tant que cycle de tension sous-jacent et le cycle de tension sous-jacent est utilisé pour déterminer le positionnement temporel de la fenêtre.

12. Procédé selon l'une quelconque des revendications précédentes, dans lequel le calcul initial de la fréquence est comparé à une plage prédéterminée et une indication est fournie en ce qui concerne les sources comprises dans la plage et/ou les sources non comprises dans la plage.

13. Procédé selon l'une quelconque des revendications précédentes, dans lequel le point de départ initial est réglé par le déclenchement manuel du procédé et les points d'arrêt et/ou de départ ultérieurs sont déterminés en fonction du procédé selon l'une quelconque des revendications précédentes.

14. Procédé selon l'une quelconque des revendications précédentes, dans lequel la fréquence sous-jacente est examinée lors du fonctionnement du processus en considérant des variations d'une fréquence moyenne en comparaison avec une fréquence moyenne pendant un intervalle de temps précédent.

15. Procédé selon la revendication 14, dans lequel l'occurrence de la valeur prédéterminée attendue et/ou le positionnement temporel de la fenêtre sont ajustés en fonction de n'importe quelle variation détectée de la fréquence sous-jacente.

16. Procédé selon l'une quelconque des revendications précédentes, dans lequel l'étendue temporelle de la fenêtre varie pendant le fonctionnement du processus.

17. Appareil destiné à contrôler l'application d'une tension de source alternative à un processus, l'appareil recevant la tension de source et appliquant la tension de source au processus pour une partie du cycle de tension, l'appareil fournissant un point de départ et un point d'arrêt entre lesquels la tension est appliquée au processus, le point d'arrêt étant défini par un point sur le cycle de tension où la tension croise un niveau prédéterminé, l'appareil fournissant :
des moyens destinés à analyser la tension de source afin de déterminer la fréquence de la tension de source et/ou le positionnement temporel de points correspondant au seuil de la tension de source ;
des moyens destinés à régler une fenêtre temporelle en se basant sur la fréquence de la tension de source et/ou en se basant sur le positionnement temporel de points correspondant au niveau prédéterminé pour la tension de source ;
des moyens destinés à contrôler le niveau de la tension de source, un ou plusieurs points étant égaux au niveau prédéterminé compris dans la fenêtre en cours de traitement en tant que points d'arrêt et un ou plusieurs points étant égaux au niveau prédéterminé non compris dans la fenêtre qui n'est pas en cours de traitement en tant que points d'arrêt.

18. Appareil selon la revendication 17, dans lequel l'appareil est prévu en tant que partie d'un dispositif de commande de puissance de soudage d'électrofusion et/ou est mis à niveau par rapport à un dispositif de commande de puissance de soudage d'électrofusion existant.
